# EUROPEAN PATENT APPLICATION

(11) **EP 4 823 102 A1**
(43) Date of publication of application: **14.10.2026**
(21) Application number: 25170043.1
(22) Date of filing: 11.04.2025
(51) Int. Cl.: H04N 23/50, H04N 23/51, H04N 23/52, H04N 23/55, G02B 7/02, G03B 30/00, H05K 1/02, H05K 7/20

(54) **OPTICAL DEVICE FOR A VEHICLE**

(71) Applicant: Magna Electronics Sweden AB, 447 37 Vårgårda (SE)
(72) Inventor: BURZA, Matthias, 44737 Vårgårda (SE)
(74) Representative: Müller Verweyen

(57) **Abstract**

The invention relates to an optical device (1) for a vehicle. The invention further relates to a vehicular camera (15) for a vehicular vision system. The optical device (1) comprises a housing (2) adapted to accommodate a lens (3, 7, 11) and a heating element (30, 130, 230, 330, 430, 530, 630, 730, 830) for heating the lens (3, 7, 11). In order to enhance the optical properties of the optical device (1), the heating element (30, 130, 230, 330, 430, 530, 630, 730, 830) is arranged within the housing (2) at a fixed distance to the lens (3, 7, 11) and adapted to transfer heat to the lens (3, 7, 11) by conduction and/or radiation. The heating element (30, 130, 230, 330, 430, 530, 630, 730, 830) is arranged within a shadow space (38, 39, 138, 139, 238, 239), wherein boundaries of the shadow space (38, 39, 138, 139, 238, 239) are formed by an inner wall (5) of the housing (2) and optical paths (25a-c, 26a-c, 125a-c, 126a-c, 225a-c, 226a-c) of light beams within a maximum field of view of the optical device (1).

## Description

The invention relates to an optical device for a vehicle as well as a vehicular camera for a vehicular vision system. The optical device comprises a housing adapted to accommodate a lens and a heating element for heating the lens.

US 2020/314311 A1 describes a vehicular camera for a vehicular vision system. The vehicular camera includes a housing having a front housing portion and a rear housing portion, with the front housing portion including a lens barrel for accommodating a lens. A heating device is disposed at an outermost lens element of the lens. The heating device includes a pair of electrically conductive elements that are routed along the lens barrel for electrical connection to circuitry at a printed circuit board. An outer end of each of the electrically conductive elements is disposed at and in contact with a heating element at and in contact with the inner surface of the outermost lens element. When powered, the heating element heats the outermost lens element to evaporate moisture or condensation thereat. The camera is configured to be disposed at an exterior portion of a vehicle so as to have a field of view exterior of the vehicle.

EP 1 626 583 A1 describes an image acquisition unit comprising a casing with a protected interior, a window closed by a transparent element and support means to carry an optical system facing said window. The unit further comprises image detection means accommodated in said casing, facing said optical system and associated with connection means with the exterior for the supply and/or bidirectional signal exchange. The unit further comprises heating means to provide thermal energy to said transparent element, or to an adjacent zone thereto, aiming at avoiding lacking transparency problems, due to ambient and climatic factors.

It is an object of the invention to enhance optical properties of the optical device.

The invention solves the problem by the features of the independent claims. Further preferred embodiments of the invention can be found in the dependent claims and the associated description and drawing.

An optical device for a motor vehicle is proposed, comprising a housing adapted to accommodate a lens. The optical device further comprises a heating element for heating the lens. It is proposed that the heating element is arranged within the housing at a fixed distance to the lens. The heating element is adapted to transfer heat to the lens by conduction and/or radiation. The heating element is arranged within a shadow space, wherein boundaries of the shadow space are formed by an inner wall of the housing and by optical paths of light beams within a maximum field of view of the optical device.

The invention is based on the finding that heating elements often take up additional space in optical devices. For example, a heater ring adjacent to the front lens makes the optical system longer. Another example is a heater wrapped around the housing, which increases the diameter of the housing. The solution according to the present invention solves this problem by using the shadow space within the housing of the optical device. This is advantageous since the solution utilizes free space and does not have an impact on the mechanical dimensions of the optical device.

The invention is further based on the finding, that hotspots often result from heater rings at the rear of and in direct contact with the front lens. These heater rings induce stresses in the materials of the lens and its coatings due to high resulting temperature gradients. The solution according to the present invention also solves this problem due to the arrangement of the heating element within the housing at a fixed distance to the lens. Thereby, heating occurs from within the housing and hot spots on optics are avoided.

Preferably, the vehicle is a motor vehicle, in particular an automobile. Preferably, the housing is formed by a lens barrel. The heating element preferably comprises a resistive electrically conductive element, such as a thin film resistance-based heating element comprising a thin film or substrate with electrically conductive traces disposed thereat that heat when a current passes there along.

The lens preferably is an optical lens. Further preferably, the lens is a biconvex lens, planoconvex lens, positive meniscus lens, negative meniscus lens, plano-concave lens, biconcave lens and/or aspheric lens. The lens preferably is an outermost lens directly in contact with a region surrounding the vehicle and/or an inner lens within the housing.

The term "lens" is preferably to be understood as a single lens or a group of lenses. The group of lenses comprises a number of lenses which are, as a group, targets of the heating by the heating element.

Preferably, the purpose of the heater element is that it heats the lens to evaporate moisture or condensation thereat.

The fixed distance preferably is a distance > 0. Further preferably, the fixed distance is a distance > 1 mm, for example 1.5 mm. In further preferred embodiment, the fixed distance is a distance > 2 mm, for example 3 mm.

The formulation according to which the heating element is adapted to transfer heat to the lens by conduction and/or radiation, is preferably understood by the skilled person that heat spreads from the heating element predominantly by conduction, by radiation, and by some minor convection. The transfer of heat by radiation is possible due to the utilization of the shadow space for locating the heating element since a free space exists between the heating element and the lens. Further preferably, no or only minor transfer of heat is taking place by induction.

The optical device further comprises a printed circuit board at the focal plane. The printed circuit board preferably has an array of charge-coupled device (CCD) sensors and/or an array of complementary metal-oxide-semiconductor (CMOS) sensors. The sensors are adapted to receive the light beam at the focal plane and transform the light into image data.

Light beams within the maximum field of view (FOV) preferably comprise light beams passing the lens and reaching a focal plane of the optical device. In other words, light beams that traverse the shadow zone cannot contribute to image formation at the focal plane. To put it another way, the skilled person will understand the term field of view (FOV) such that it comprises all possible light beams that pass the lens and reach the focal plane of the optical device. The inner wall and/or a wall portion of an aperture portion generally limits the possible optical paths.

The optical device preferably comprises a power line adapted to supply the heating element with power. Further preferably, the power line leads power from the printed circuit board along the first and/or second housing portion to the heating element. Further on, the power line is preferably at least partwise running along the inner wall of the housing. Alternatively or additionally, the power line is at least partwise running along an outer wall of the housing. Alternatively, or additionally, the power line is at least partwise running within the housing wall, preferably in-mold. When running along the inner wall portion or within the housing wall, the power line is secured from external influences such as weather, wind and temperature.

In a further preferred embodiment of the optical device, the housing has an aperture portion forming an optical aperture. The shadow space is formed by the inner wall, by a wall portion of the aperture portion, and by the optical paths of light beams within the maximum field of view. The heating element is arranged in contact with the wall portion of the aperture portion.

The wall portion of the aperture portion is a suitable portion for locating the heating element within the shadow space. For all embodiments the heating element may face either side of the aperture portion. In other words, the heating element preferably faces (in direction of the optical axis) a receiving lens for receiving a light beam from a region surrounding the optical device (i.e. the heating element is facing the front). Alternatively or additionally, the heating element preferably faces (in the direction of the optical axis) an inner lens located within the housing (i.e. the heating element is facing rearward).

The wall portion of the aperture portion preferably comprises or consists of a heat-reflective material such as metal for directing heat to the lens. Alternatively or additionally, the wall portion of the aperture portion preferably comprises or consists of heat-absorbing material such as ceramic or ceramic-resin for radiating heat from the wall portion. For example, the effective area of heating element is much smaller than the effective area of the wall portion. Alternatively or additionally, the wall portion of the aperture portion preferably comprises or consists of a heat-transferring material such as metal or high thermal conductive resin for effectively transmitting heat generated by heating element from one side of wall the portion, to which the heating element is attached, to the other side of the wall portion.

Alternatively or additionally, the heating element forms the wall portion of the aperture portion. This may be achieved by a heating element designed with the shape of the wall portion of the aperture portion. Alternatively, the heating element is over-molded by the wall portion.

According to a further preferred embodiment of the optical device, the wall portion is prism-shaped such that the heating element is orientated beveled relative to an optical axis of the optical device.

Depending on the angle of heating element relative to the optical axis, an optimally distributed heating of the lens is achieved.

In a further preferred embodiment of the optical device, the housing has an aperture portion forming an optical aperture, the housing has a first housing portion adapted to accommodate the lens. The housing has a second housing portion adapted to accommodate a further lens. The aperture portion provides a transition from the first housing portion to the second housing portion. The heating element for heating the lens and/or the further lens is arranged in a fixed distance to the lens and/or arranged in a fixed distance to the further lens. The boundaries of the shadow space are formed by the inner wall, by a wall portion of the aperture portion, and by optical paths of light beams within a maximum field of view of the optical device.

The further lens is preferably an inner lens arranged within the housing. The further lens is preferably arranged in a direction of the optical axis between the lens and the focal plane.

Light beams within the maximum field of view (FOV) preferably comprise light beams passing the lens, passing the optical aperture, passing the further lens, and reaching the focal plane of the optical device.

According to a further preferred embodiment of the optical device, the heating element is arranged in a direction of an optical axis between the further lens and the focal plane.

Thereby, a solution for particularly heating the further lens of the optical device is provided. The further lens is preferably an inner lens.

In a further preferred embodiment of the optical, the heating element is arranged in a direction of an optical axis between the lens and the further lens.

This embodiment is advantageous since both lenses can be heated by the heating element.

According to a further preferred embodiment of the optical device, the heating element is arranged in a direction of an optical axis between a receiving lens for receiving a light beam from a region surrounding the optical device and an inner lens located within the housing.

This embodiment is particularly advantageous since the receiving lens as well as the inner lens may be heated by the same heating element.

The receiving lens preferably is an outermost lens for receiving light from an exterior portion of a vehicle (region surrounding the vehicle). This outermost lens may be exposed to weather influences, temperature changes, wind, etc.

In a further preferred embodiment of the optical device, the heating element is arranged in contact with a lens holder for holding the lens.

Thereby, good heat transport from the heating element to spread the heat within the lens system is achieved. In particular, a lens adjacent to the lens holder (and thereby adjacent to the lens held by the lens holder) may be heated by the heating element. The embodiment is particularly suitable for an arrangement where there is no or no substantial aperture wall between two lenses.

The term "lens holder" may also be referred to as lens barrel or spacer ring.

In a further preferred embodiment of the optical device, the heating element is arranged in contact with the inner wall of the housing.

Thereby, an evenly distributed spreading of heat is achieved. This secures mild temporal and spatial gradients, leading to decreased stresses and longer lifespan of optical elements.

Preferably, the heating element is arranged in contact with an inner surface of the inner wall of the housing.

According to a further preferred embodiment of the optical device, the inner wall has a recess, wherein the heating element is at least partly embedded within the recess.

In order to solve the problem above, a vehicular camera for a vehicular vision system is proposed, comprising an optical device described above.

Concerning advantages, embodiments, and design details of the vehicular camera, reference may be made to the above description of the corresponding device features of the optical device for a vehicle.

Preferably, the vehicular camera is configured to be disposed at an exterior portion of a vehicle so as to have a field of view exterior of the vehicle

In the following, the invention shall be illustrated on the basis of preferred embodiments with reference to the accompanying drawings, wherein:
- Fig. 1: shows a side view of a first embodiment of an optical device,
- Fig. 2: shows a front view of the optical device shown in Fig. 1,
- Fig. 3: shows a sectional view of the optical device along section B-B shown in Fig. 2,
- Fig. 4: shows the optical device shown in Fig. 3 with indicated optical paths of light beams,
- Fig. 5: shows an illustrative sectional view of the optical device along section B'-B' and section A-A with an indicated shadow region,
- Fig. 6: shows an illustrative sectional view of the optical device along section C'-C' and section A-A with an indicated shadow region,
- Fig. 7: shows a sectional view of the optical device along section D'-D' and section A-A with an indicated shadow region,
- Fig. 8: shows a second embodiment of an optical device in a sectional view along section D'-D',
- Fig. 9: shows a third embodiment of an optical device in a sectional view along section D'-D',
- Fig. 10: shows a fourth embodiment of an optical device in a sectional view along section D'-D',
- Fig. 11: shows a fifth embodiment of an optical device in a sectional view along section D'-D',
- Fig. 12: shows a sixth embodiment of an optical device in a sectional view along section D'-D',
- Fig. 13: shows a seventh embodiment of an optical device in a sectional view along section D'-D',
- Fig. 14: shows an eighth embodiment of an optical device in a sectional view along section D'-D',
- Fig. 15: shows a ninth embodiment of an optical device in a sectional view along section D'-D', and
- Fig. 16: shows a sectional view of a tenth embodiment of an optical device along a section B-B shown in Fig. 2.

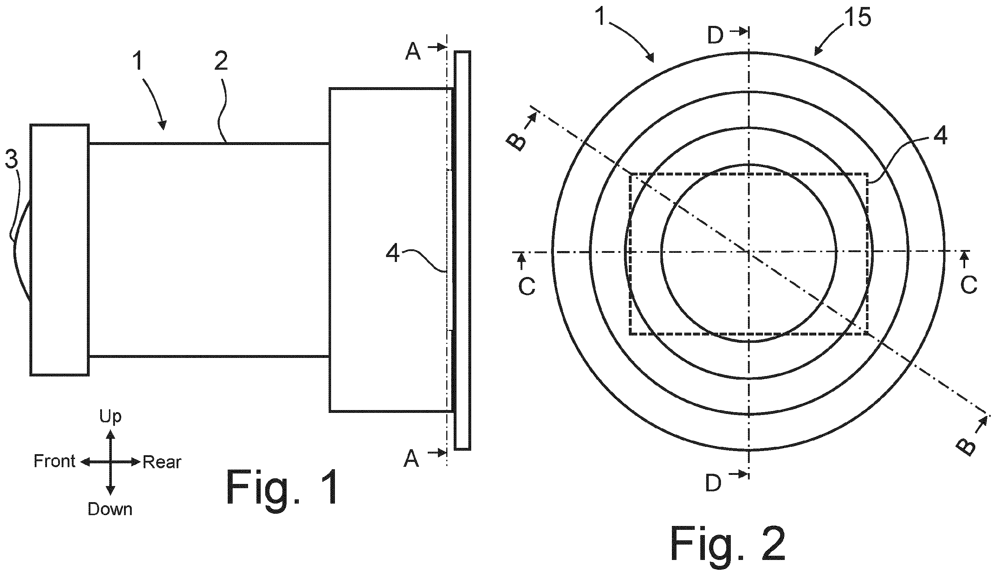

Fig. 1 shows an optical device 1 in a side view having a housing 2, a lens 3, and a printed circuit board 4. The printed circuit board 4 has an array of charge-coupled device (CCD) sensors and/or an array of complementary metal-oxide-semiconductor (CMOS) sensors. Fig. 2 shows the optical device 1 in a front view. The printed circuit board 4 is indicated by a dashed line in Figs. 1 and 2. The optical device 1 is part of a vehicular camera 15 for a vehicular vision system.

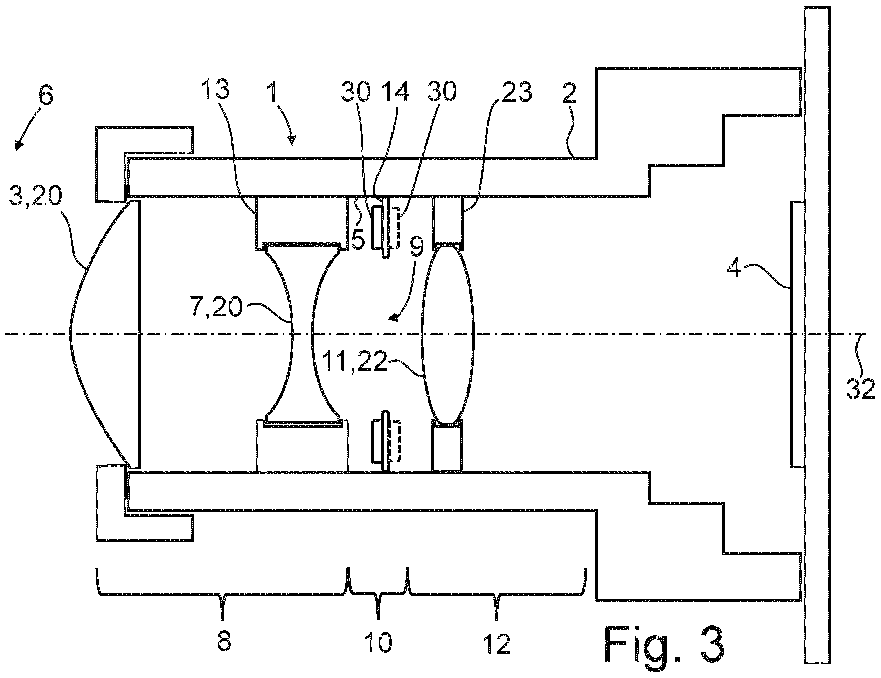

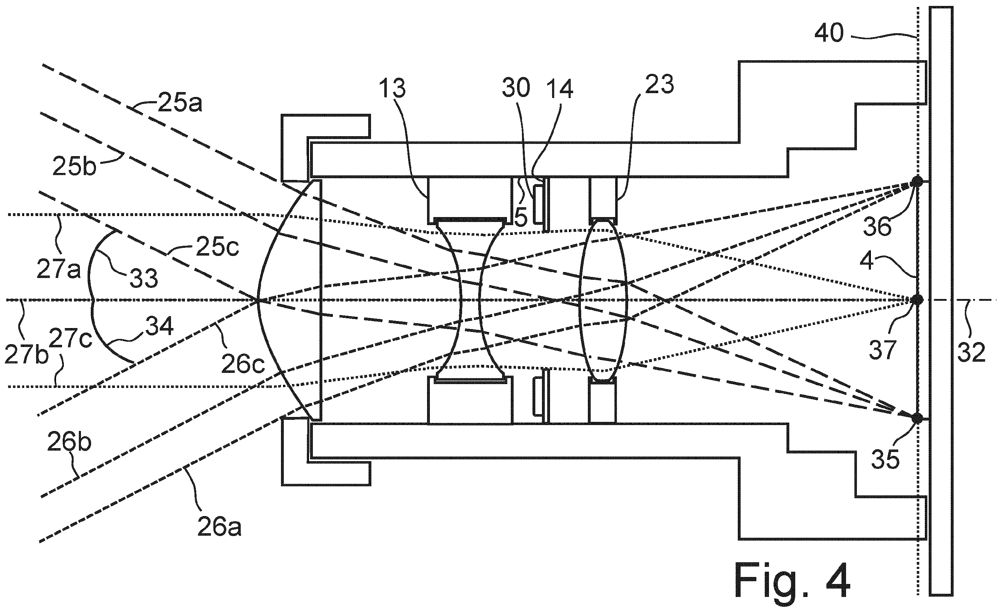

Fig. 3 and 4 show the optical device 1 in a sectional view along section B-B indicated in Fig. 2. Optical device 1 has an optical axis 32. Lens 3 represents a receiving lens for receiving light beams from a region 6 surrounding the optical device 1. In other words, lens 3 is an outermost lens for receiving light from an exterior portion of a vehicle, namely region 6 surrounding the vehicle. This exterior is exposed to weather influences, such as wind and temperature, etc.

A lens 7 is arranged in direction of an optical axis 32 behind lens 3 within a first housing portion 8 of housing 2 of the optical device 1. Housing 2 has a lens holder 13 for accommodating lens 7. An aperture 9 is arranged in the direction of optical axis 32 behind lens 7 within an aperture portion 10 of the optical device 1. Aperture 9 has a wall portion 14.

A further lens 11 is arranged in the direction of the optical axis 32 behind aperture 9 within a second housing portion 12 of optical device 1. Housing 2 has a further lens holder 23 for accommodating lens 11.

Lenses 3 and 7 each represent a lens 20 being arranged in the direction of the optical axis 32 in front of aperture portion 10. Lens 11 represents a further lens 22 being arranged in the direction of the optical axis behind aperture portion 10. Aperture portion 10 provides a transition from first housing portion 8 to second housing portion 12.

Fig. 4 shows the same sectional view of the optical device 1 as shown in Fig. 3. Equal elements and elements with equal function are indicated by the same reference numerals. Additionally, optical paths 25a, 25b, 25c, 26a, 26b, 26c and 27a, 27b, 27c are indicated in Fig. 4. The optical paths 25a-c and 26a-c are represented by dashed lines (dashes of optical path 26a-c are shorter than dashes of optical path 25a-c). Optical paths 27a-c are represented by dotted lines.

Optical paths 25a-c, 26a-c and 27a-c represent the path of a light beam traveling from region 6 to printed circuit board 4. These optical paths 25a-c, 26a-c and 27a-c have the following properties which depend on the design of optical device 1: Optical paths 25a-c, 26a-c and 27a-c pass lenses 3, 7, aperture 9 and lens 11. Moreover, optical paths 25a-c, 26a-c and 27a-c are characterized in that they reach focal points 35, 36 and 37. Focal points 35, 36, 37 lie in a focal plane 40. Optical paths 27a-c are running parallel to optical axis 32 before reaching lens 3. Optical paths 25a-c and 26a-c have an angle 33 and 34, respectively, relative to the optical axis 32 when reaching lens 3. This angle 33 and 34, respectively, is a maximum of possible angles of optical paths that have the above properties, namely reaching and passing lens 3, passing lens 7, passing aperture 9, passing lens 11, and reaching focal point 35 and 36, respectively. In other words, a light beam having a greater angle than 33 or 34 when reaching lens 3 will not reach any focal point at printed circuit board 4. Accordingly, optical paths 25a-c and 26a-c represent the limits of the maximum field of view (FOV) of optical device 1.

A heating element 30 is arranged in contact with wall portion 14. Thereby, the heating element 30 is arranged at a fixed distance, e.g. 1.5 mm, to lens 3 and 7. Heating element 30 primarily transfers heat to lens 7 and secondly to lens 3. The heating element 30 faces lens 7 and lens 3. In other words, the heating element 30 faces in direction of the optical axis 32 to the front. Fig. 3 shows an alternative arrangement of the heating element 30 (indicated by a dashed line) facing lens 11, i.e., in direction of the optical axis 32 rearward.

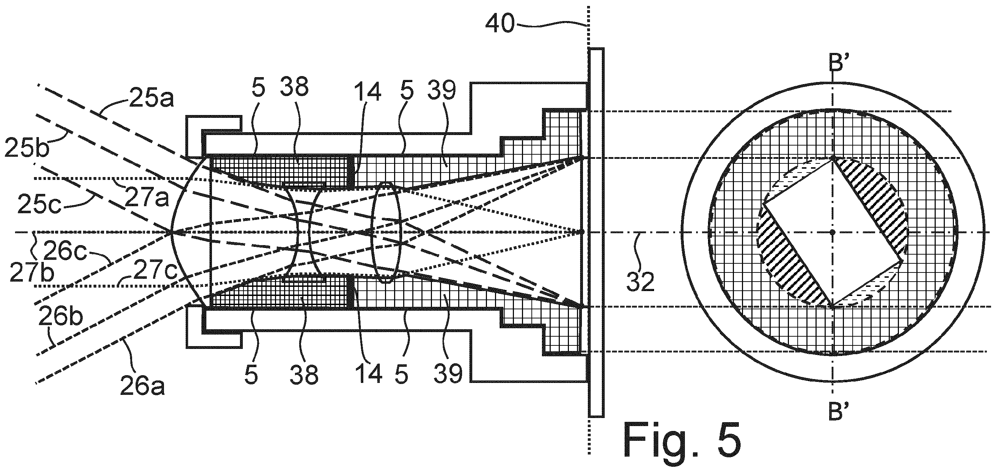

Fig. 5 shows an illustrative sectional view of the optical device 1 shown in Fig. 3 and 4. Fig. 5 shows the sectional view along section B'-B' and section A-A. The lens holder 13 and 23 as well as the heating element 30 are cut out. Two shadow regions 38 and 39 are indicated by areas having a grid pattern.

The shadow regions 38 and 39 each are defined by boundaries. The boundaries of shadow region 38 are formed by an inner wall 5 of housing 2, by wall portion 14 and by optical paths 25a and 27a. Shadow region 38 would be rotationally symmetrical when rotating optical device 1 around optical axis 32, but its boundaries are also formed by the inner wall 5, the wall portion 14 and optical paths 26a and 27c. The boundaries of shadow region 39 are formed by housing 2, wall portion 14 and optical paths 27a and 26c. Since shadow region 39 is rotationally symmetrical, its boundaries are also formed by inner wall 5, wall portion 14 and optical paths 27c and 25c.

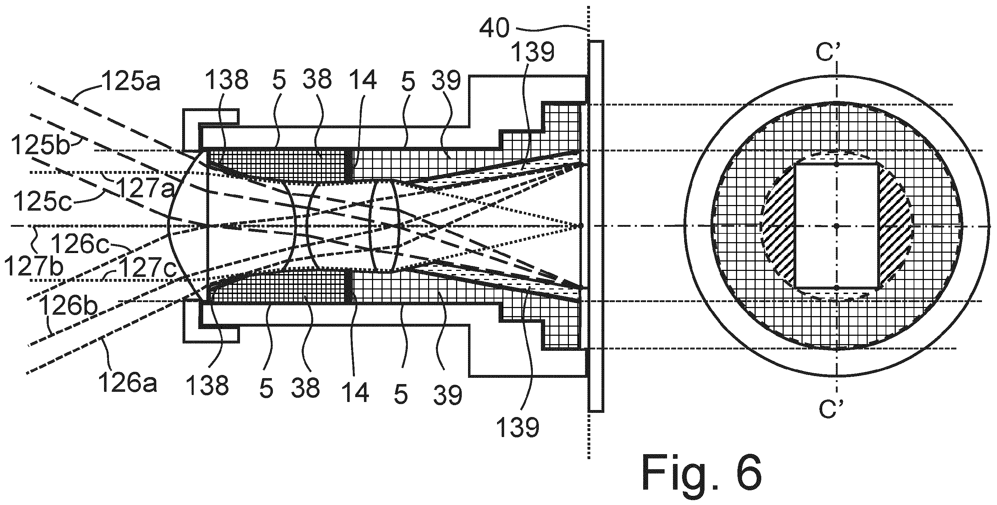

Fig. 6 shows an illustrative sectional view of the optical device 1 shown in Fig. 3 and 4. Fig. 6 shows the sectional view along section C'-C' and section A-A. The lens holder 13 and 23 as well as the heating element 30 are cut out. Shadow regions 38 and 39 are indicated by areas having a grid pattern (as shown in Fig. 5). Further shadow regions 138 and 139 are indicated by areas having dashed lines.

Shadow regions 38, 39, 138, 139 are defined by boundaries. The boundaries of shadow regions 38 and 138 are formed by inner wall 5, by wall portion 14 and by optical paths 125a and 127a. Moreover, the boundaries of shadow regions 38 and 138 are also formed by inner wall 5, by wall portion 14 and by optical paths 126a and 127c. The boundaries of shadow regions 39 and 139 are formed by inner wall 5, by wall portion 14 and by optical paths 127a and 126c. Moreover, the boundaries of shadow regions 39 and 139 are formed by inner wall 5, by wall portion 14 and by optical paths 127c and 125c.

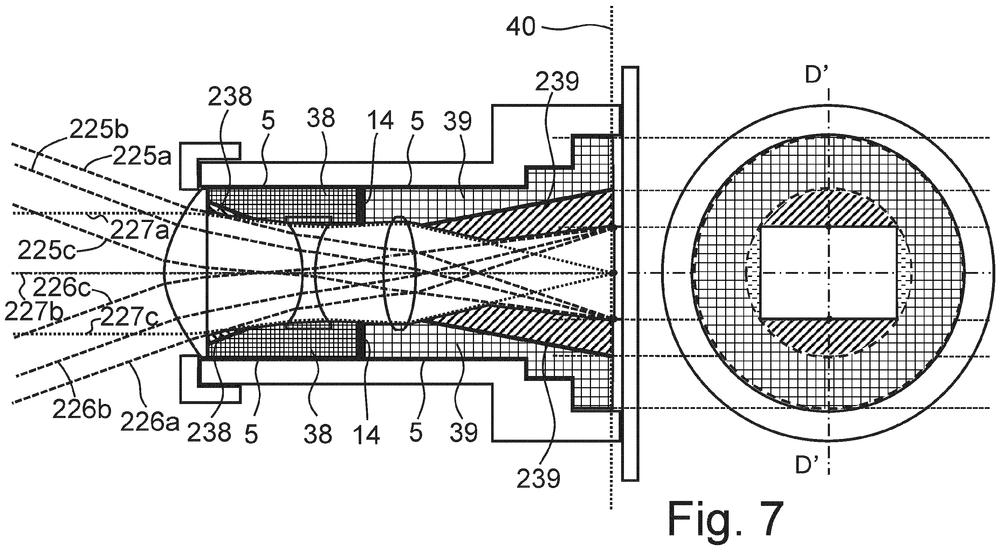

Fig. 7 shows an illustrative sectional view of the optical device 1 shown in Fig. 3 and 4. Fig. 7 shows the sectional view along section D'-D' and section A-A. The lens holder 13 and 23 as well as the heating element 30 are cut out. Shadow regions 38 and 39 are indicated by areas having a grid pattern (as shown in Fig. 5). Further shadow regions 238 and 239 are indicated by areas having a lined pattern.

Shadows regions 38, 39, 238 and 239 are defined by boundaries. The boundaries of shadow regions 38 and 238 are formed by inner wall 5, by wall portion 14 and by optical paths 225a and 227a. Moreover, the boundaries of shadow regions 38 and 238 are also formed by inner wall 5, by wall portion 14 and by optical paths 226a and 227c. The boundaries of shadow regions 39 and 239 are formed by inner wall 5, by wall portion 14 and by optical paths 227a and 226c. Moreover, the boundaries of shadow regions 39 and 239 are also formed by inner wall 5, by wall portion 14 and by optical paths 227c and 225c.

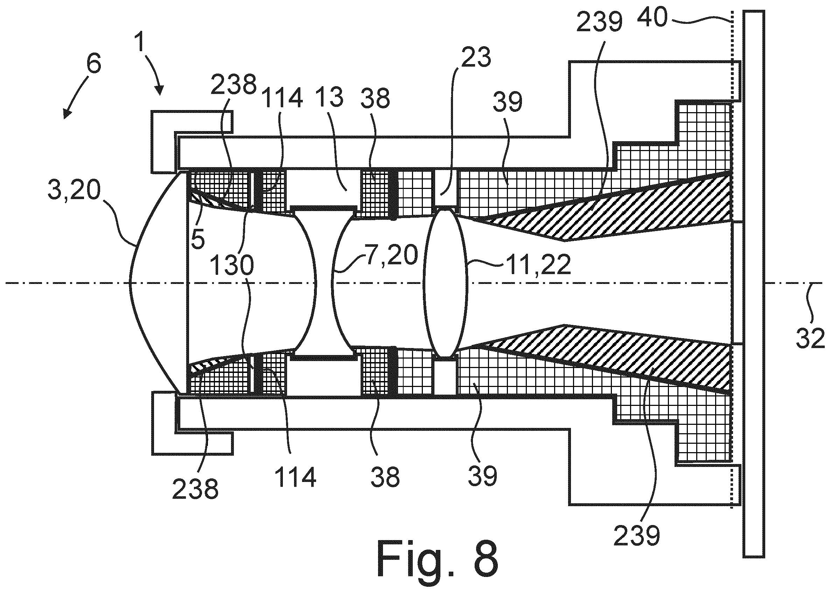

Fig. 8 shows a second embodiment of an optical device 1 in a sectional view along section D'-D'. Fig. 8 shows lens holders 13 and 23 as well as shadow regions 38, 39, 238, 239. The optical device 1 shown in Fig. 8 is designed similar to the optical device 1 shown in Figs. 1, 2, 3 and 4. Equal elements and elements having equal function are indicated by the same reference numerals. A heating element 130 is arranged within shadow region 38 in contact with a wall portion 114. The heating element 130 is arranged in the direction of the optical axis 32 between lens 3 and lens 7. Lens 3 is a receiving lens for receiving a light beam from region 6 surrounding the optical device 1. Lens 7 is an inner lens located within the housing 2. Thereby, the heating element 130 is arranged at a fixed distance, e.g. 1 mm, to lens 3 while primarily providing heat to lens 3.

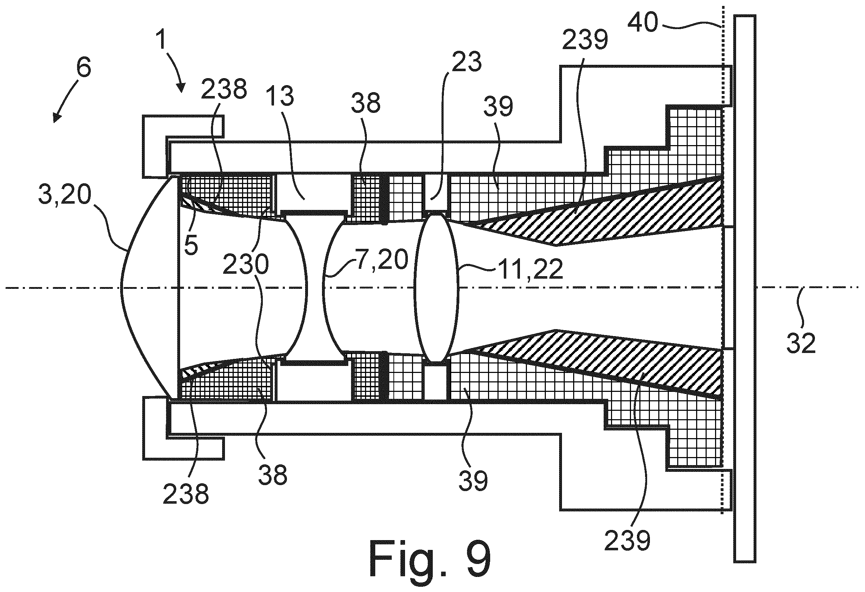

Fig. 9 shows a third embodiment of an optical device 1 in a sectional view along section D'-D'. Optical device 1 shown in Fig. 9 is designed similar to optical device 1 shown in Fig. 8. Equal elements and elements having equal function are indicated by the same reference numerals. A heating element 230 is arranged within shadow region 38 in contact with lens holder 13. The heating element 230 is arranged in the direction of the optical axis 32 between lens 3 and lens 7. Lens 3 is a receiving lens for receiving a light beam from region 6 surrounding the optical device 1. Lens 7 is an inner lens located within the housing 2. Thereby, the heating element 230 is arranged at a fixed distance, e.g 1.2 mm, to lens 3 while providing heat to lens 3 through radiation. Moreover, heat is transferred to lens 7 by conduction. Lens 3 is adjacent to lens 7, wherein lens 7 is held by lens holder 13.

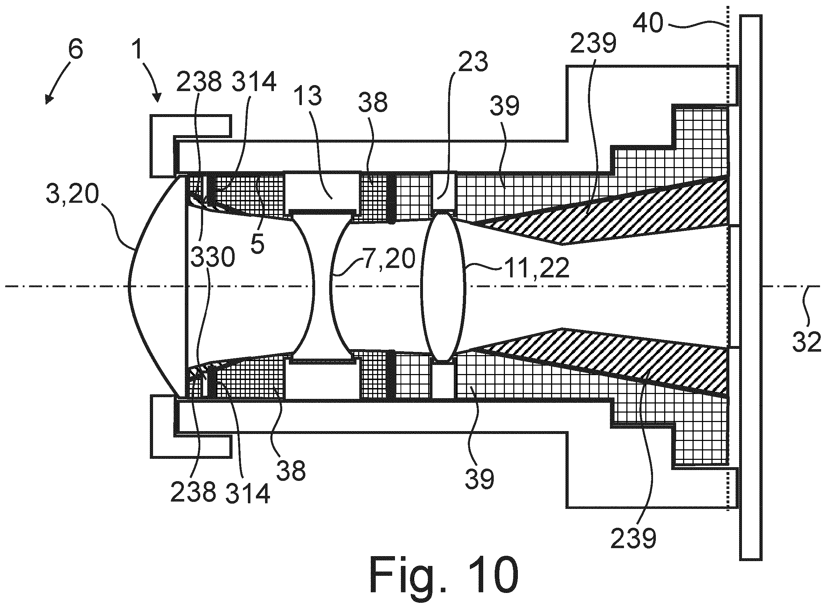

Fig. 10 shows a fourth embodiment of an optical device 1 in a sectional view along section D'-D'. Optical device 1 shown in Fig. 10 is designed similar to optical device 1 shown in Fig. 9. Equal elements and elements having equal function are indicated by the same reference numerals. A heating element 330 is arranged within shadow region 38 and 138 in contact with a wall portion 314. The heating element 330 is arranged in the direction of the optical axis 32 between lens 3 and lens 7. Lens 3 is a receiving lens for receiving a light beam from region 6 surrounding the optical device 1. Lens 7 is an inner lens located within the housing 2. Thereby, the heating element 330 is arranged at a fixed distance, e.g. 0.5 mm, to lens 3 while primarily providing heating to lens 3.

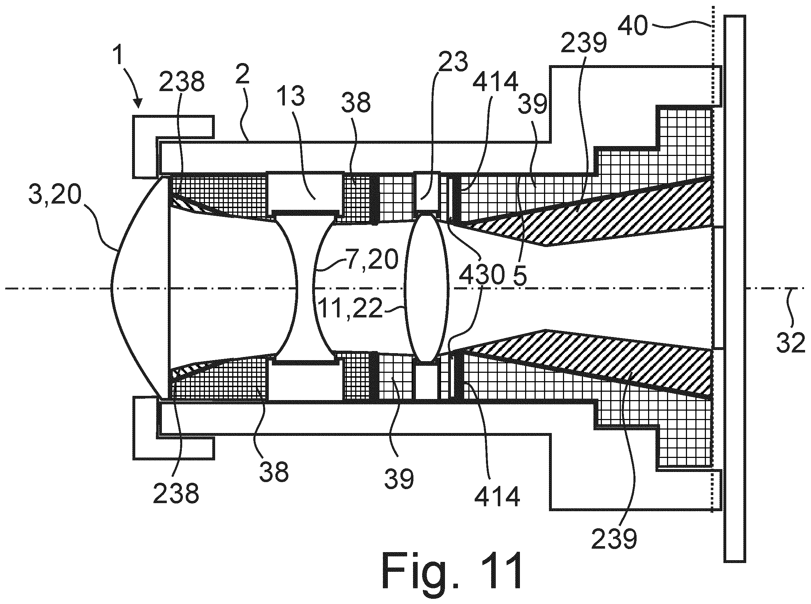

Fig. 11 shows a fifth embodiment of an optical device 1 in a sectional view along section D'-D'. Optical device 1 shown in Fig. 11 is designed similar to optical device 1 shown in Fig. 10. Equal elements and elements having equal function are indicated by the same reference numerals. A heating element 430 is arranged within shadow region 39 in contact with a wall portion 414. Thereby, the heating element 430 is arranged at a fixed distance, e.g. 0.5 mm, to lens 11. Lens 11 is an inner lens arranged within housing 2. Lens 11 represents a further lens 22. Heating element 430 is arranged in the direction of the optical axis 32 between the lens 11 and the focal plane 40. The heating element 430 primarily transfers heat to lens 7.

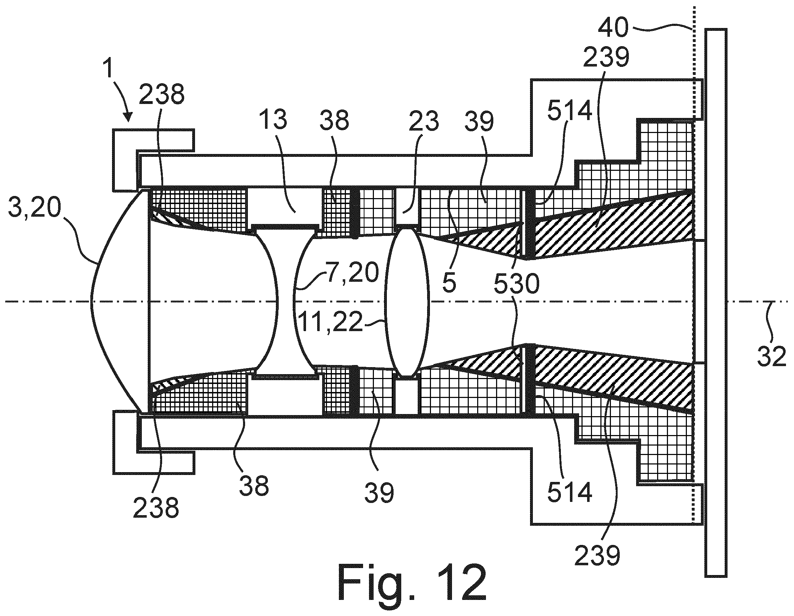

Fig. 12 shows a sixth embodiment of an optical device 1 in a sectional view along section D'-D'. Optical device 1 shown in Fig. 12 is designed similar to optical device 1 shown in Fig. 11. Equal elements and elements having equal function are indicated by the same reference numerals. A heating element 530 is arranged within shadow region 39 and 239 in contact with a wall portion 514. Thereby, the heating element 530 is arranged at a fixed distance, e.g. 1.5 mm, to lens 11. Heating element 530 primarily heats lens 11. Lens 11 is an inner lens arranged within housing 2. Lens 11 represents a further lens 22.

Heating element 530 is arranged in the direction of the optical axis 32 between the lens 11 and the focal plane 40.

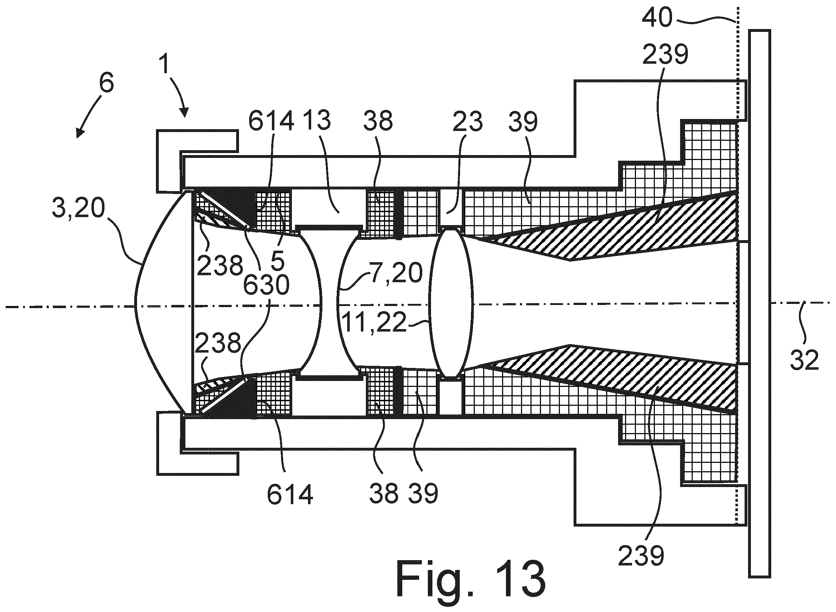

Fig. 13 shows a seventh embodiment of an optical device 1 in a sectional view along section D'-D'. Optical device 1 shown in Fig. 13 is designed similar to optical device 1 shown in Fig. 12. Equal elements and elements having equal function are indicated by the same reference numerals. A heating element 630 is arranged within shadow region 38 in contact with a wall portion 614. The wall portion 614 is prism-shaped such that the heating element 630 is oriented beveled relative to the optical axis 32. The heating element 630 is arranged in the direction of the optical axis 32 between lens 3 and lens 7. Thereby, the heating element 630 is arranged at a fixed distance, e.g. 0.5 mm, to lens 3 while providing heat to lens 3.

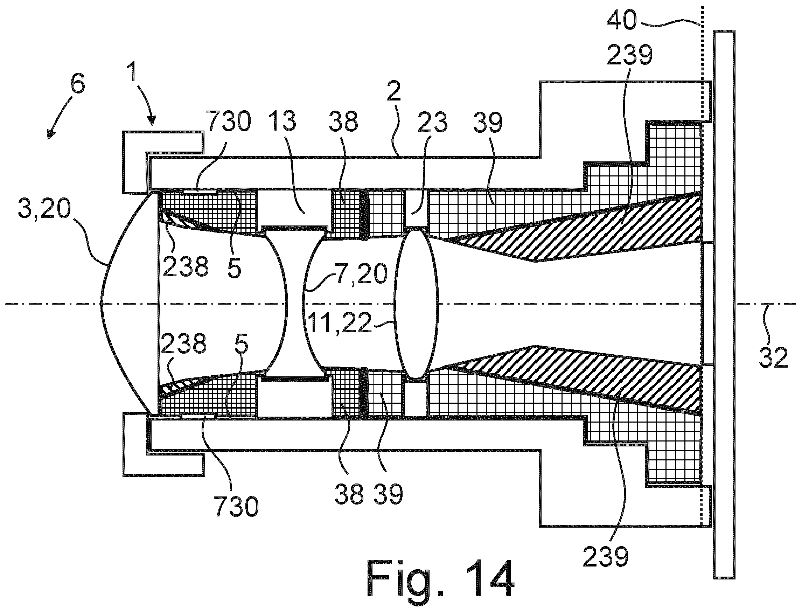

Fig. 14 shows an eighth embodiment of an optical device 1 in a sectional view along section D'-D'. Optical device 1 shown in Fig. 14 is designed similar to optical device 1 shown in Fig. 13. Equal elements and elements having equal function are indicated by the same reference numerals. A heating element 730 is arranged within shadow regions 38 in contact with inner wall 5 of housing 2. The heating element 730 is arranged in the direction of the optical axis 32 between lens 3 and lens 7. Thereby, the heating element 730 is arranged at a fixed distance, e.g. 0.7 mm, to lenses 3 and 7 while providing heat to lenses 3 and 7.

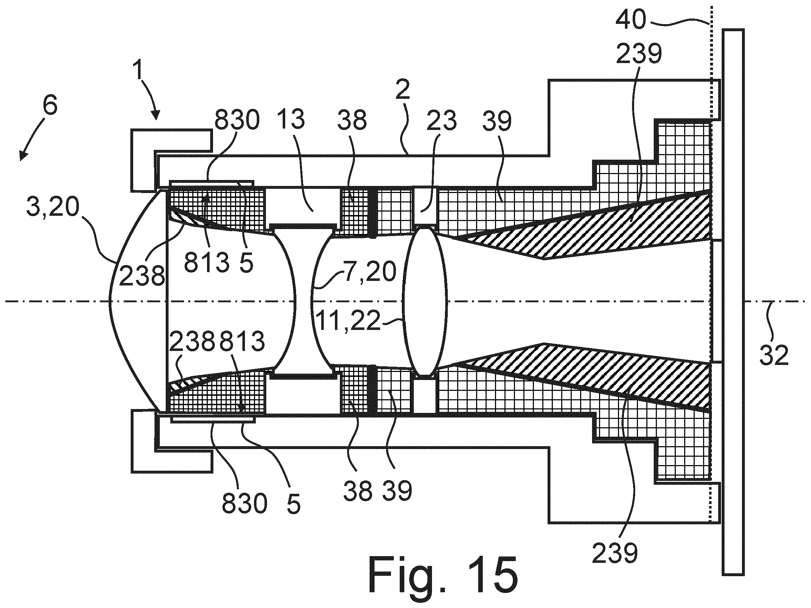

Fig. 15 shows a ninth embodiment of an optical device 1 in a sectional view along section D'-D'. Optical device 1 shown in Fig. 15 is designed similar to optical device 1 shown in Fig. 14. Equal elements and elements having equal function are indicated by the same reference numerals. A heating element 830 is arranged within a recess 813 in the inner wall 5 of housing 2. At the recess 813, the inner wall 5 has an increased distance to the optical axis 32. The heating element 830 is arranged in the direction of the optical axis 32 between lens 3 and lens 7. Thereby, the heating element 830 is arranged at a fixed distance to lenses 3 and 7 while providing heat to lenses 3 and 7.

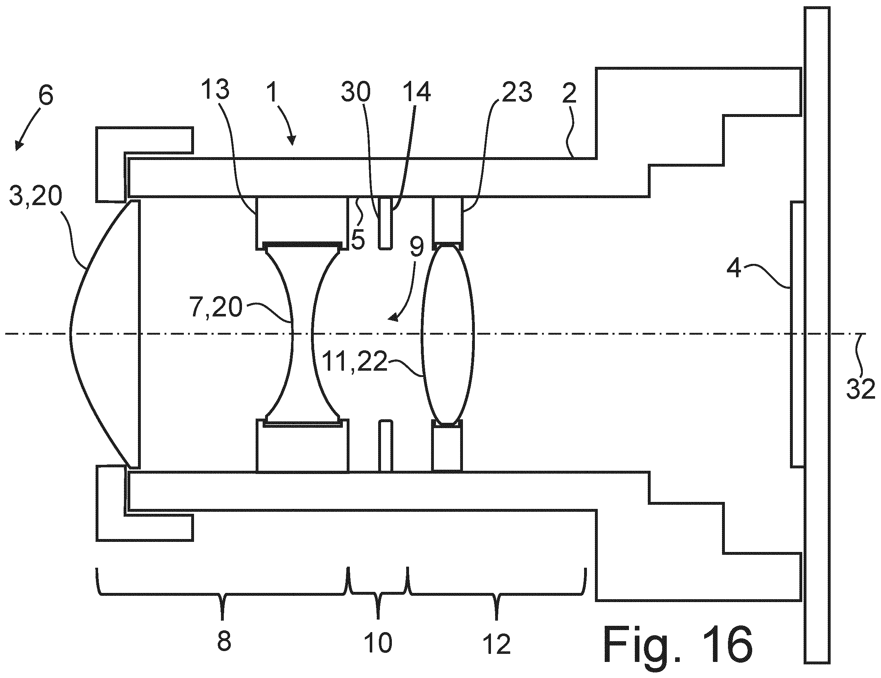

Fig. 16 shows a tenth embodiment of an optical device 1 in a sectional view along section B-B (shown in Fig. 2). Optical device 1 shown in Fig. 16 is designed similar to optical device 1 shown in Fig. 3. Equal elements and elements having equal function are indicated by the same reference numerals. As shown in Fig. 16, the heating element 30 itself forms a wall portion 14 of the aperture portion 10. In other words, the wall portion 14 itself is a heating element 30.

Although the invention has been illustrated and described in detail in the foregoing embodiments, it is to be understood that the invention is not limited to the particular embodiments disclosed, but that other variations can be made by one skilled in the art without departing from the spirit and scope of the invention.

### Reference list

- 1: optical device
- 2: housing
- 3: lens
- 4: printed circuit board
- 5: inner wall
- 6: region
- 7: lens
- 8: first housing portion
- 9: aperture
- 10: aperture portion
- 11: lens
- 12: second housing portion
- 13: lens holder
- 14: wall portion
- 15: vehicular camera
- 20: lens
- 22: further lens
- 23: lens holder
- 25a-c: optical path
- 26a-c: optical path
- 27a-c: optical path
- 30: heating element
- 32: optical axis
- 33, 34: angle
- 35,36,37: focal point
- 38: shadow region
- 39: shadow region
- 40: focal plane
- 114: wall portion
- 125a-c: optical path
- 126a-c: optical path
- 127a-c: optical path
- 130: heating element
- 138: shadow region
- 139: shadow region
- 225a-c: optical path
- 226a-c: optical path
- 227a-c: optical path
- 230: heating element
- 238: shadow region
- 239: shadow region
- 314: wall portion
- 330: heating element
- 414: wall portion
- 430: heating element
- 514: wall portion
- 530: heating element
- 614: wall portion
- 630: heating element
- 730: heating element
- 813: recess
- 830: heating element

## Claims

1. An optical device for a vehicle, comprising:
- a housing (2) adapted to accommodate a lens (3, 7, 11) and
- a heating element (30, 130, 230, 330, 430, 530, 630, 730, 830) for heating the lens (3, 7, 11),
**characterized in that**
- the heating element (30, 130, 230, 330, 430, 530, 630, 730, 830) is arranged within the housing (2) at a fixed distance to the lens (3, 7, 11) and adapted to transfer heat to the lens (3, 7, 11) by conduction and/or radiation, and
- the heating element (30, 130, 230, 330, 430, 530, 630, 730, 830) is arranged within a shadow space (38, 39, 138, 139, 238, 239), wherein boundaries of the shadow space (38, 39, 138, 139, 238, 239) are formed by
-- an inner wall (5) of the housing (2) and
-- optical paths (25a-c, 26a-c, 125a-c, 126a-c, 225a-c, 226a-c) of light beams within a maximum field of view of the optical device (1).

2. The optical device according to claim 1, **characterized in that**
- the housing (2) has an aperture portion (10) forming an optical aperture (9),
- the shadow space (38, 39, 138, 139, 238, 239) is formed by
-- the inner wall (5),
-- a wall portion (14, 114, 314, 414, 514, 614) of the aperture portion (10), and
-- the optical paths (25a-c, 26a-c, 125a-c, 126a-c, 225a-c, 226a-c) of light beams within the maximum field of view, and
- the heating element (30, 130, 330, 430, 530, 630) is arranged in contact with the wall portion (14, 114, 314, 414, 514, 614) of the aperture portion (10).

3. The optical device according to claim 2, **characterized in that** the wall portion (614) is prism-shaped such that the heating element (630) is orientated beveled relative to an optical axis (32) of the optical device (1).

4. The optical device according to any one of the preceding claims, **characterized in that**
- the housing (2) has an aperture portion (10) forming an optical aperture (9),
- the housing (2) has a first housing portion (8) adapted to accommodate the lens (3, 7, 20) and the housing (2) has a second housing portion (12) adapted to accommodate a further lens (11, 22),
- the aperture portion (10) provides a transition from the first housing portion (8) to the second housing portion (12),
- the heating element (30, 130, 230, 330, 430, 530, 630, 730, 830) for heating the lens (3,7, 20) and/or the further lens (11, 22) is arranged in a fixed distance to the lens (3, 7, 20) and/or the further lens (11, 22), and
- the boundaries of the shadow space (38, 39, 138, 139, 238, 239) are formed by
-- the inner wall (5),
-- a wall portion (14, 114, 314, 414, 514, 614) of the aperture portion (10), and
-- optical paths (25a-c, 26a-c, 125a-c, 126a-c, 225a-c, 226a-c) of light beams within a maximum field of view of the optical device (1).

5. The optical device according to claim 4, **characterized in that** the heating element (430, 530) is arranged in a direction of an optical axis (32) between the further lens (11) and the focal plane (40).

6. The optical device according to any one of the preceding claims 4 or 5, **characterized in that** the heating element (30) is arranged in a direction of an optical axis (32) between the lens (3, 7) and the further lens (11).

7. The optical device according to any one of the preceding claims 4 to 6, **characterized in that** the heating element (130, 230, 330, 630, 730) is arranged in a direction of an optical axis (32) between
- a receiving lens (3) for receiving a light beam from a region (6) surrounding the optical device (1) and
- an inner lens (7) located within the housing (2).

8. The optical device according to any one of the preceding claims, **characterized in that** the heating element (230) is arranged in contact with a lens holder (13, 23) for holding the lens (7, 11).

9. The optical device according to any one of the preceding claims, **characterized in that** the heating element (730) is arranged in contact with the inner wall (5) of the housing (2).

10. The optical device according to claim 9, **characterized in that** the inner wall (5) has a recess (813), wherein the heating element (830) is at least partly embedded within the recess (813).

11. A vehicular camera for a vehicular vision system, comprising an optical device (1) according to any one of the preceding claims 1-10.
